# EUROPÄISCHE PATENTSCHRIFT

(11) **EP 0 824 979 B1**
(45) Veröffentlichungstag und Bekanntmachung des Hinweises auf die Patenterteilung: **24.10.2001**
(21) Anmeldenummer: 97111888.0
(22) Anmeldetag: 12.07.1997
(51) Int. Cl.: B21D 39/04

(54) **Verfahren zum Verbinden von Werkstücken sowie Pressgerät hierfür**
Process for connecting workpieces and pressing device therefore
Procédé pour connecter des pièces ainsi que presse pour cet usage

(30) Priorität: 17.08.1996 DE 19633199
(43) Veröffentlichungstag der Anmeldung: 25.02.1998
(73) Patentinhaber: NOVOPRESS GMBH PRESSEN UND PRESSWERKZEUGE & CO. KG., 41460 Neuss (DE)
(72) Erfinder: Nghiem, Xuang Long, Dr., 47804 Krefeld (DE)
(74) Vertreter: Paul, Dieter-Alfred, Dipl.-Ing.

(56) Entgegenhaltungen:
- DE-A- 2 613 240
- DE-A- 3 505 463
- DE-A- 4 321 249
- DE-U- 9 405 783
- DE-U- 29 602 240
- DE-U- 29 604 276
- FR-A- 2 707 368

## Beschreibung

Die Erfindung betrifft ein Verfahren zum Verbinden von Werkstükken, insbesondere von Preßfittings mit einem Rohr, bei dem ein Preßgerät mit seinen wenigstens zwei Preßbacken in Offenstellung an die Verbindungsstelle der Werkstücke angesetzt und die Preßbacken dann mittels eines Backenantriebs gegeneinander unter plastischer Verformung der Werkstücke bis in eine Endpreßstellung verfahren werden, in der spätestens die Leistungsbeaufschlagung der Preßbacken endet. Die Erfindung bezieht sich desweiteren auf ein Preßgerät zum Verbinden von solchen Werkstükken mit wenigstens zwei Preßbacken und einem Backenantrieb zum Bewegen der Preßbacken aus einer Offen- in eine Endpreßstellung sowie mit einer Steuereinrichtung zur Steuerung des Backenantriebs, wobei das Preßgerät so ausgebildet ist, daß die Leistungsbeaufschlagung der Preßbacken spätestens bei Erreichen der Endpreßstellung endet.

Zum Verbinden von Rohren ist es bekannt, hülsenförmige Preßfittings zu verwenden, die zum Zweck der Herstellung einer Rohrverbindung über die Rohrenden geschoben und dann radial zusammengepreßt werden, wobei sowohl das Preßfitting als auch das Rohr plastisch verformt werden. Solche Rohrverbindungen und die zugehörigen Preßfittings sind beispielsweise aus der DE-C-11 87 870, EP-B-0 361 630 und EP-A-0 582 543 bekannt.

Die Verpressung geschieht mit Hilfe von Preßgeräten, wie sie in verschiedenen Ausführungsformen beispielsweise in der DE-C-21 36 782, DE-A-34 23 283, EP-A-0 451 806, EP-B-0 361 630 und DE-U-296 04 276.5 bekannt sind. Die Preßgeräte haben eine Preßbackeneinheit mit zumindest zwei oder teilweise auch mehr Preßbacken, die beim Preßvorgang radial nach innen zwecks Bildung eines im wesentlichen geschlossenen Preßraums bewegt werden. Für diese Bewegung ist ein Backenantrieb vorgesehen, beispielsweise in Form eines Elektromotors oder eines hydraulischen Druckzylinders oder einer Kombination von beiden.

Bei den bekannten Preßgeräten fährt der Backenantrieb immer gegen eine bestimmte, gleichbleibende Endkraft. Hierfür sind Endkraftbegrenzer, beispielsweise in Form eines Überdruckventils bei einem hydraulischen Druckzylinder, einer Drehmomentkupplung bei einem rotierenden Antrieb oder eines Überstromauslösers bei einem Elektromotor, vorgesehen. Damit unter allen Umständen eine vollständige Verpressung stattfindet, ist die Endkraft relativ hoch eingestellt. Ungenauigkeiten bei dem Endkraftbegrenzer wirken sich nämlich stark auf die tatsächlich erreichbare Endkraft aus, da Endkraftbegrenzer nicht direkt die von dem Backenantrieb ausgehende Kraft messen, sondern eine umgewandelte Größe, die nur einen Bruchteil der tatsächlichen Antriebskraft darstellt. Die hohe Endkraft führt zu Verschleiß an den Lagerpunkten der Preßbacken, und alle von dem Backenantrieb beaufschlagten Teile müssen entsprechend dimensioniert werden.

Die vorbeschriebenen Probleme treten schon dann auf, wenn der Backenantrieb auf die jeweils mit ihm verbundene Preßbackeneinheit - und auch auf die damit zu verpressenden Werkstücke - abgestimmt ist. Gewöhnlich wird jedoch ein bestimmter Backenantrieb für ein Backenset aus einer Vielzahl von Preßbackeneinheiten verwendet, die für die Verpressung unterschiedlicher Durchmesser ausgebildet sind. Der Backenantrieb ist hierfür leicht von der jeweiligen Preßbackeneinheit lösbar und mit einer anderen Preßbackeneinheit verbindbar. Damit der Backenantrieb für alle Preßbackeneinheiten eines Backensets verwendet werden kann, werden der Backenantrieb sowie der Endkraftbegrenzer so ausgelegt, daß der Backenantrieb sowie die durch diesen erzielbare Endkraft auch für die Verpressung mit der größten Preßbakkeneinheit ausreichend sind.

Selbst bei diesen Presseneinheiten kommt es schon zu den oben beschriebenen Problemen. Sie werden umso gravierender, je kleiner die Preßbackeneinheit und demgemäß je geringer die zu leistende Verformungsarbeit ist. Die Endkraft, bei der der Backenantrieb ausgeschaltet wird, liegt dann weit über der tatsächlich benötigten Kraft. Dies macht es nötig, die Preßbackeneinheiten für kleine Durchmesser der Werkstücke stark überzudimensionieren, d. h. sie sind teurer und schwerer als notwendig und unterliegen hohem Verschleiß. Da es jedoch noch kostenaufwendiger wäre, für jede Preßbackeneinheit einen angepaßten Backenantrieb vorzusehen - von den Transportproblemen ganz abgesehen -, wird dies notgedrungen in Kauf genommen.

Bei den vorbeschriebenen Preßgeräten wirkt der Backenantrieb auf einen Stempel mit Spreizrollen, der beim Preßvorgang in Richtung auf die Preßbackeneinheit ausgefahren wird. Dabei fahren die Spreizrollen zwischen zwei spiegelbildlich angeordnete Schwenkhebel und spreizen diese durch Beaufschlagung von gegenüberliegenden Spreizflächen an den Schwenkhebeln auseinander. An den freien Enden der Schwenkhebel sitzen die Preßbacken, die durch das Spreizen der Schwenkhebel zusammengefahren werden.

Das in der DE-A-43 21 249 beschriebene Preßgerät arbeitet umgekehrt, d.h. der Stempel wird beim Preßvorgang in Richtung auf den Backenantrieb gezogen. Die Spreizrollen befinden sich zu Beginn des Preßvorgangs zwischen den Schwenkhebeln nahe ihrer Schwenkachsen. Die Spreizflächen schließen einen sich V-förmig in Richtung auf den Backenantrieb verengenden Spalt ein, der beim Preßvorgang unter Verkleinerung des V-Winkels durch die Spreizrollen aufgeweitet wird. Bei Erreichen der Endpreßstellung fahren die Spreizrollen in einen Abschnitt zwischen den Schwenkhebeln ein, in dem die Spreizflächen parallel zueinander verlaufen, so daß keine Kraft mehr auf die Preßbacken übertragen wird. In diesem Abschnitt befindet sich ein Endabschalter, der den Motor automatisch abschaltet.

In der gattungsbildenden FR-A-2 707 368 ist ein Preßgerät beschrieben, das einen Verschiebesensor zur Erfassung der Stellung der Preßbacken und Kraftmeßsensoren zur Erfassung der Preßkraft aufweist. Die Kraftmeßsensoren schalten den Backenantrieb ab, wenn ein vorher eingestellter Sollkraftwert erreicht ist. Die Kraftmeßsensoren wirken also als Endschalter. Der Verschiebesensor ermöglicht es, die Position des Backenantriebs in der Endpreßstellung zu bestimmen.

Der Erfindung liegt die Aufgabe zugrunde, ein Verfahren bereitzustellen, das die beweglichen Teile des Preßgeräts weniger belastet und einen geringeren Verschleiß beim Verpressen verursacht. Eine weitere Aufgabe besteht darin, ein dafür geeignetes Preßgerät vorzusehen.

Soweit es das Verfahren angeht, wird die Aufgabe erfindungsgemäß dadurch gelöst, daß ausgehend vom Stand der Technik gemäß Oberbegriff von Anspruch 1 die Leistung des Backenantriebs derart gesteuert wird, daß die Preßbacken wenigstens zum Preßende hin eine geringere kinetische Energie haben als ohne Leistungssteuerung.

Diesem Vorschlag liegt die schon zur Erfindung gehörende Erkenntnis zugrunde, daß sich bei voller, d. h. ungesteuerter Leistung des Backenantriebs in den von ihm bewegten Teilen, insbesondere in der Preßbackeneinheit, in erheblichem Umfang kinetische Energie aufbaut, und zwar vor allem in der ersten, den Leerhub überbrückenden Phase. Diese Energie baut sich umso weniger ab, je geringer die zu leistende Verformungsarbeit ist.

Mit der erfindungsgemäßen Verringerung der kinetischen Energie wird erreicht, daß die Maximalkraft, die auf die von dem Backenantrieb bewegten Teile wirkt, wesentlich herabgesetzt wird und im Idealfall gleich der bei der Verformung der Werkstücke aufzubringenden Maximalkraft ist.

Vorzugsweise wird der Backenantrieb spätestens bei Erreichen der Endpreßstellung abgeschaltet. Die lageabhängige Abschaltung des Backenantriebs in Verbindung mit der Reduzierung der kinetischen Energie, die im Idealfall am Preßende gleich null ist, haben zur Folge, daß nach Abschalten des Backenantriebs keine durch die dann noch vorhandene kinetische Energie hervorgerufenen, hohen Kräfte auftreten. Entsprechend können die Preßbackeneinheiten insbesondere im unteren Größenbereich wesentlich leichter dimensioniert werden, und auch der Verschleiß ist erheblich geringer.

Der erfinderische Grundgedanke kann - was die Art des Leistungsverlaufs angeht - auf verschiedene Weise verwirklicht werden.
So ist es denkbar, daß die Preßbacken von Anfang an mit voller Leistung beaufschlagt werden, der Backenantrieb aber vor Erreichen der Endpreßstellung abgeschaltet wird. Die Verformungsarbeit kann dann von der in den bewegten Teilen gespeicherten kinetischen Energie geleistet werden, wobei sich diese Energie bis zur Endpreßstellung teilweise oder ganz abbaut. Das Abschalten des Backenantriebs kann dann in Abhängigkeit von der Größe der Presseneinheit so vorgenommen werden, daß sie umso früher erfolgt, je geringer die zu leistende Verformungsarbeit ist, d. h. im Regelfall je geringer der Durchmesser der zu verpressenden Werkstücke ist und je weicher sie ausgebildet sind.

Alternativ dazu ist vorgesehen, daß die Preßbacken in einer ersten Phase des Preßvorgangs, bei der ein Leerhub überwunden wird, mit einem Leistungsverlauf beaufschlagt werden, bei dem die Leistung derart herabgesetzt wird, daß die Preßbacken wenigstens am Ende dieser Phase eine geringere kinetische Energie haben als ohne Leistungsbegrenzung. Vorzugsweise sollte dabei der Leistungsverlauf derart sein, daß die kinetische Energie der Preßbacken in der ersten Phase nicht die bei Preßende übersteigt. Diesem Vorschlag liegt die Beobachtung zugrunde, daß sich insbesondere in der Leerhubphase eine hohe kinetische Energie aufbaut, die dann in der eigentlichen Verpreßphase nicht mehr oder nur ungenügend abgebaut wird. Wird die kinetische Energie in der ersten Phase durch Herabsetzung der Leistung des Backenantriebs gering gehalten, führt sie nicht mehr oder nur unbedeutend zu einer Erhöhung der kinetischen Energie in der Verpreßphase. Dabei kann zusätzlich in Frage kommen, den Leistungsverlauf derart zu gestalten, daß die kinetische Energie der Preßbacken zum Preßende hin abfällt, indem die Leistungsabgabe des Backenantriebs im Endbereich wieder herabgesetzt wird.

Auch bei dem vorstehend beschriebenen Leistungsverlauf kann es zweckmäßig sein, daß die Leistungsbeaufschlagung der Preßbacken schon vor Erreichen der Endpreßstellung abgebrochen wird, so daß die restliche Verformungsarbeit durch die dann noch in den bewegten Teilen gespeicherte kinetische Energie geleistet wird. Dabei sollte der Abbruch der Leistungsbeaufschlagung idealerweise so geschehen, daß die kinetische Energie bei Erreichen der Endpreßstellung gleich Null ist.

Es versteht sich, daß besonders optimale Verhältnisse erreicht werden, wenn der Leistungsverlauf stufenlos an die jeweils zu leistende Arbeit angepaßt wird, und zwar mit dem erfindungsgemäßen Ziel, am Preßende eine möglichst geringe kinetische Energie zu haben. Ein großer Fortschritt wird jedoch schon dann erreicht, wenn sich der Leistungsverlauf stufenweise ändert, selbst dann, wenn nur eine Stufe vorhanden ist, beispielsweise in Form einer ersten Phase, bei der mit reduzierter Leistung gefahren wird, und einer zweiten Phase, bei der die Preßbacken mit voller Leistung beaufschlagt werden. Die Umschaltung von der ersten zur zweiten Phase kann dann an die jeweilige Preßbakkeneinheit angepaßt werden, und zwar zweckmäßigerweise derart, daß die Umschaltung umso mehr zum Preßende verschoben wird, je geringer die zu leistende Verformungsarbeit ist, also gewöhnlich je geringer der Durchmesser der Werkstücke und je weicher deren Material sind.

Was das Preßqerät angeht, ist zur Durchführung des vorbeschriebenen Verfahrens ein Preßgerät nach Oberbegriff von Anspruch 9 mit einer Steuereinrichtung mit einer Leistungssteuereinrichtung vorgesehen, die einen derartigen Leistungsverlauf des Backenantriebs erzeugt, daß die Preßbacken wenigstens zum Preßende hin eine geringere kinetische Energie haben als ohne Leistungssteuerung. Je nach Ausbildung der Leistungssteuereinrichtung können die vorbeschriebenen Alternativen des erfindungsgemäßen Verfahrens verwirklicht werden. Soweit der Leistungsverlauf zweistufig gestaltet ist, kann die Leistungssteuereinrichtung derart ausgebildet sein, daß die erste Phase bis in den Bereich der Verformung hineinreicht, und zwar umso mehr, je geringer die zu leistende Verformungsarbeit ist.

Bei der konstruktiven Gestaltung der Leistungsteuereinrichtung kann auf den allgemeinen Stand der Technik zur Leistungssteuerung von Elektromotoren zurückgegriffen werden. Dabei kommt insbesondere eine elektronische Leistungssteuerung in Frage.

In besonders bevorzugter Ausbildung ist ein Endabschlater zur Abschaltung des Backenantriebs spätestens bei Erreichen der Endpreßstellung vorgesehen. Der Endabschalter kann durch die Steuereinrichtung so angesteuert werden, daß der Backenantrieb vor Erreichen der Endpreßstellung abgeschaltet wird, um die in den bewegten Teilen noch gespeicherte kinetische Energie für die Restverformung des Werkstücks zu nutzen mit dem Ziel, daß die kinetische Energie bei Erreichen der Endpreßstellung möglichst weitgehend verbraucht ist.

In besonders bevorzugter Ausbildung weist der Endabschalter einen Aufnehmer zur Erfassung der Stellung der Preßbacken auf, der in der Weise mit der Steuereinrichtung gekoppelt ist, daß die Leistungssteuereinrichtung in Abhängigkeit von der Stellung der Preßbacken angesteuert wird. Nach diesem Merkmal wird also die Stellung der Preßbacken direkt erfaßt und für die Leistungssteuereinrichtung herangezogen. Dabei ist es von besonderem Vorteil, wenn der Aufnehmer mit einem Signalgeber für die Leistungssteuereinrichtung gekoppelt ist, und zwar insbesondere dann, wenn der Aufnehmer und ggf. der Signalgeber an den Preßbacken selbst angeordnet sind. Dies läßt es zu, Aufnehmer und Signalgeber an die jeweilige Preßbackeneinheit jeweils so anzugleichen, daß ein weitgehend optimal an diese Preßbackeneinheit angepaßter Leistungsverlauf erzielt wird, und zwar in Abhängigkeit von der tatsächlichen Stellung der Preßbacken zueinander. Vorzugsweise sollte der Aufnehmer und ggf. der Signalgeber an zwei benachbarten Preßbacken derart angeordnet sein, daß er die Stellung dieser Preßbacken relativ zueinander erfaßt, und zwar vorzugsweise im Bereich der gegenüberliegenden Stirnseiten.

Dies kann beispielsweise in der Weise geschehen, daß der Aufnehmer jeweils einen beweglich gelagerten Fühler aufweist, der mit einem Anschlag zusammenwirkt, gegen den der Fühler beim Schließen der Preßbacken anfährt. Dabei kann der Fühler an einer Preßbacke und der Anschlag an der benachbarten Preßbacken angebracht sein. Zweckmäßig ist auch, wenn der Anschlag in Bewegungsrichtung des Fühlers verstellbar ausgebildet ist.

In der Zeichnung ist die Erfindung anhand eines Ausführungsbeispiels näher veranschaulicht. Es zeigen:
- Figur 1: ein Preßgerät in der Frontansicht in Offenstellung mit Preßfitting und Rohrende;
- Figur 2: einen Querschnitt durch das Preßgerät gemäß Figur 1 in der Ebene A-A;
- Figur 3: eine Frontansicht der Preßbackeneinheit des Preßgeräts gemäß den Figuren 1 und 2 mit einem elektrischen Aufnehmer;
- Figur 4: eine Schaltungsdarstellung für die Leistungssteuerung des Preßgeräts gemäß den Figuren 1 bis 3;
- Figuren 5 bis 7: vergrößerte Darstellungen der Abstandssensoreinrichtung der Preßbackeneinheit gemäß Figur 3 in verschiedenen Stellungen.

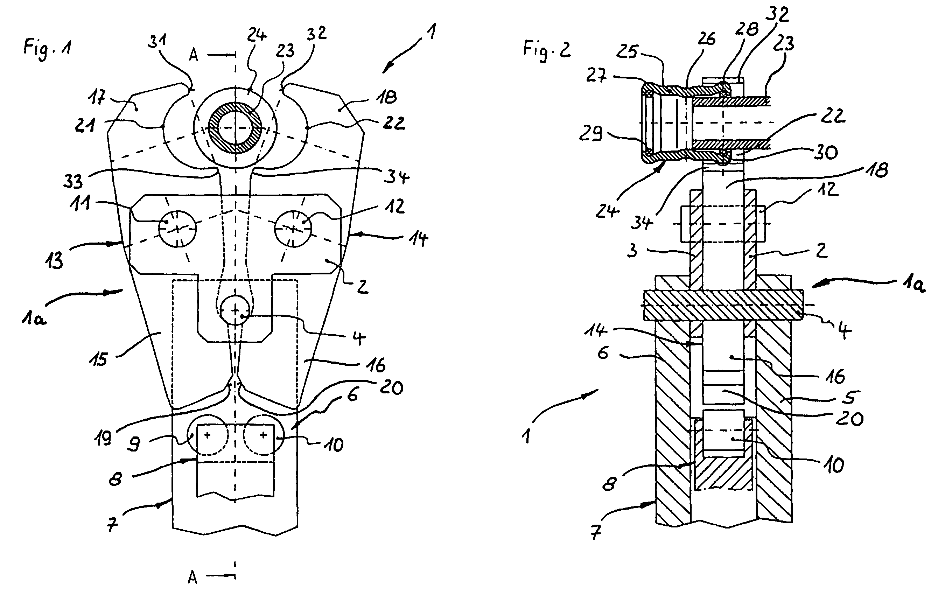

Das in den Figuren 1 und 2 dargestellte Preßgerät 1 weist eine Preßbackeneinheit 1a mit zwei T-förmigen Lagerplatten 2, 3 auf, die - in der Frontansicht gemäß Figur 1 gesehen - genau hintereinander angeordnet sind. Im unteren Teil werden die Lagerplatten 2, 3 durch einen Verbindungsbolzen 4 durchsetzt. Auf diesem Verbindungsbolzen 4 sind von beiden Seiten Tragplatten 5, 6 aufgesetzt (in Figur 1 ist die vordere Tragplatte 5 weggelassen), welche zum insgesamt mit 7 bezeichneten Backenantrieb gehören. Sie sind nur mit ihrem oberen Bereich dargestellt.

An den unteren Enden der Tragplatten 5, 6 ist ein hier nicht näher dargestellter, elektrischer Antriebsmotor befestigt, der ebenfalls zu dem Backenantrieb 7 gehört und auf eine Antriebsstange wirkt. Das obere Ende der Antriebsstange ist mit einem obenseitig gabelförmig ausgebildeten Antriebskopf 8 versehen. Innerhalb des Antriebskopfs 8 sind nebeneinander zwei Antriebsrollen 9, 10 um eine horizontale Achse frei drehbar gelagert. Mit Hilfe des Antriebsmotors kann der Antriebskopf 8 vertikal nach oben und auch wieder zurück nach unten bewegt werden. Der Verbindungsbolzen 4 ist herausnehmbar ausgebildet, so daß der gesamte Backenantrieb 7 auf einfache Weise von der Preßbackeneinheit 1a abgenommen werden kann.

Im oberen Bereich werden die Lagerplatten 2, 3 von im Abstand nebeneinander angeordneten Lagerbolzen 11, 12 durchsetzt. Auf jedem der Lagerbolzen 11, 12 ist ein Schwenkhebel 13, 14 zwischen den Lagerplatten 2, 3 gelagert. Die beiden Schwenkhebel 13, 14 sind spiegelsymmetrisch ausgebildet. Sie weisen von den Lagerbolzen 11, 12 nach unten gehende Antriebsarme 15, 16 und nach oben gehende Backenarme 17, 18 auf. Die Antriebsarme 15, 16 haben Antriebsflächen 19, 20, welche - von außen nach innen gesehen - zunächst zur Horizontalen nur schwach V-förmig geneigt sind und dann in einen steil nach oben gehenden Bereich übergehen. In den einander gegenüberstehenden Seiten der Backenarme 17, 18 sind halbkreisförmige Ausnehmungen eingeformt, die die Kontur von Preßbacken 21, 22 bilden.

Die Figuren 1 und 2 zeigen das Preßgerät 1 in der Offenstellung, bei der der Antriebskopf 8 seine unterste Stellung einnimmt, in der er nicht an den Antriebsarmen 15, 16 anliegt. Das Preßgerät 1 ist an einer Rohrverbindung so angesetzt, daß sie zwischen den Preßbacken 21, 22 liegt. Die Rohrverbindung weist einen Rohrendbereich 23 auf, über den ein Preßfitting 24 teilweise geschoben ist. Dies läßt sich insbesondere aus Figur 2 ersehen, in der der Rohrendbereich 23 und das Preßfitting 24 axial geschnitten dargestellt sind. Das Preßfitting 24 hat einen Zylinderabschnitt 25 mit einer als Anschlag für den Rohrendbereich 23 dienenden, mittig liegenden Einschnürung 26. An den freien Enden weist das Preßfitting 24 nach außen gewölbte Ringwülste 27, 28 auf, in die innenseitig jeweils ein elastomerer Dichtring 29, 30 eingelegt ist. Die Preßbacken 21, 22 liegen auf Höhe des in Figur 2 rechtsseitigen Ringwulsts 28.

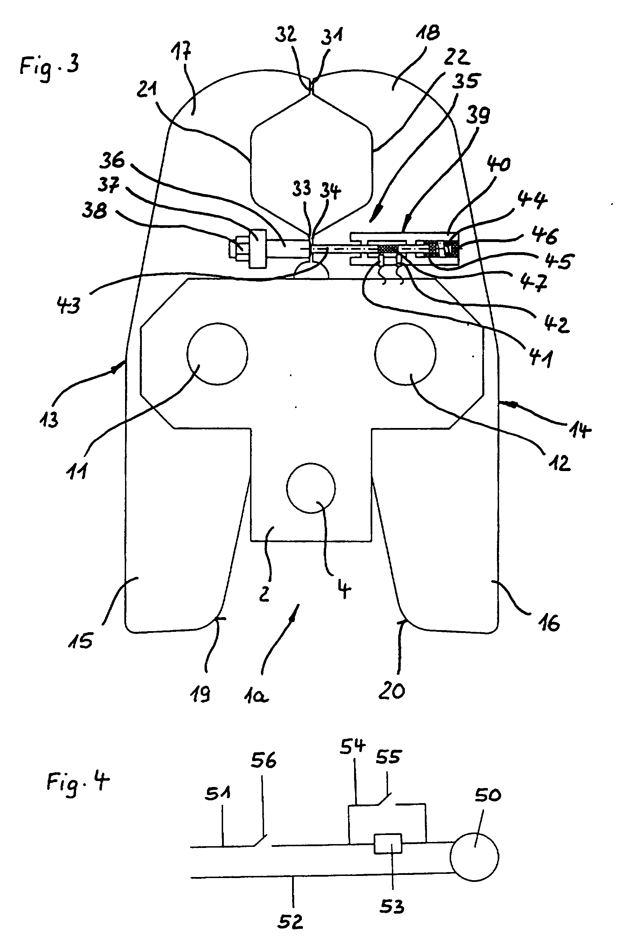

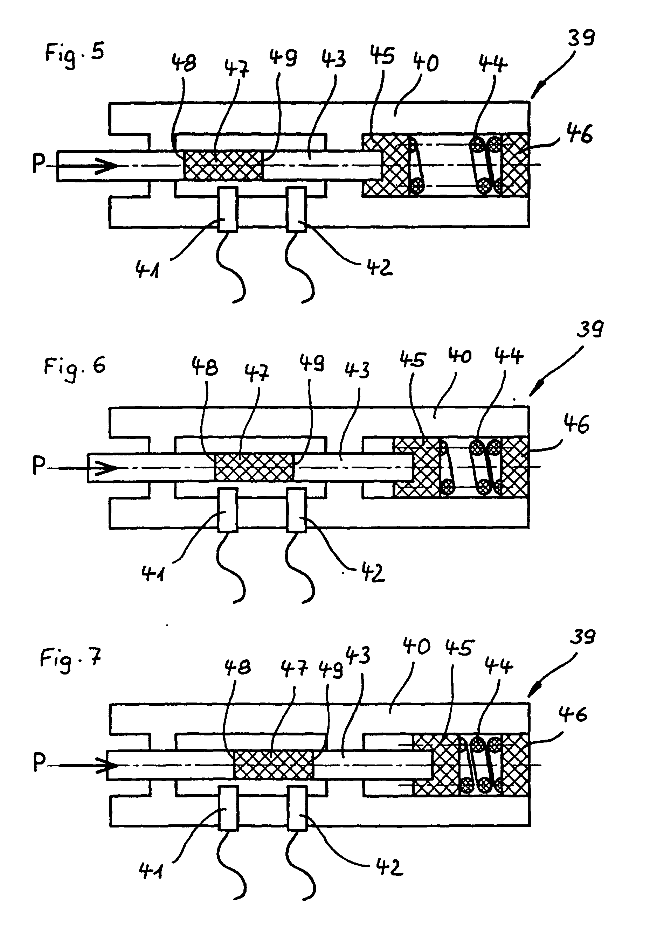

Für den Preßvorgang wird der Antriebsmotor des Backenantriebs 7 eingeschaltet, so daß die Antriebsstange zusammen mit dem daran angebrachten Antriebskopf 8 nach oben ausfährt. Dabei kommen die Antriebsrollen 9, 10 zunächst an den flach geneigten Abschnitten der Antriebsfläche 19, 20 zur Anlage. Bei weiterem Hochfahren werden die Antriebsarme 15, 16 auseinandergespreizt, was zur Folge hat, daß sich die Backenarme 17, 18 einander annähern und dabei einen Leerhub ausführen, bis die Preßbacken 21, 22 zur Anlage an dem Ringwulst 28 kommen. Mit dem weiteren Hochfahren des Antriebskopfs 8 beginnt dann der eigentliche Preßvorgang, bei dem der Ringwulst 28 und der sich unmittelbar anschließende Bereich des Zylinderabschnitts 25 radial nach innen plastisch verformt werden. Im letzten Preßstadium wird dann auch der Rohrendbereich 23 radial nach innen plastisch verformt. Dabei fahren die Antriebsrollen 9, 10 - wie aus den Figuren 3 und 4 zu ersehen - in den Bereich zwischen den Antriebsarmen 15, 16 ein, wo die Antriebsflächen 19, 20 nur noch einen sehr spitzen Winkel einnehmen, also sehr steil zueinander geneigt sind. Der Preßvorgang ist beendet, wenn die oberen Stirnseiten 31, 32 und die unteren Stirnseiten 33, 34 eine definierte Endpreßstellung erreicht haben, bei der sie entweder zur Anlage gekommen sind oder nur noch einen definierten Minimalabstand haben.

In Figur 3 ist lediglich die Preßbackeneinheit 1a des Preßgeräts 1 dargestellt, und zwar in nahezu geschlossener Stellung. Der Bakkenantrieb 7 ist abgenommen. Auf Höhe des unteren Paares von Stirnseiten 33, 34 der Preßbacken 21, 22 ist - zusätzlich zu der Darstellung gemäß Figur 1 - ein insgesamt mit 35 bezeichneter Abstandsaufnehmer angeordnet, über den der Abstand der Stirnseiten 33, 34 erfaßt werden kann. Der Abstandsaufnehmer 35 weist einen Anschlagbolzen 36 auf, der in einem an dem Backenarm 17 befestigten Halteblock 37 eingeschraubt ist. Über das Gewinde in dem Durchgangsloch des Halteblocks 37 kann der Anschlagbolzen 36 axial so eingestellt werden, daß er leicht über die Stirnseite 33 in den dort vorhandenen Spalt hineinragt. Die einmal gefundene Stellung kann dann durch eine Kontermutter 38 fixiert werden.

Dem Anschlagbolzen 36 gegenüber ist an dem rechtsseitigen Bakkenarm 18 eine auf Wirbelstrombasis arbeitender Abstandssensoreinrichtung 39 angebracht. Sie weist ein Führungsgehäuse 40 auf. In den unteren Teil des Führungsgehäuses 40 sind horizontal nebeneinander und im Abstand zueinander ein erster Sensor 41 und ein zweiter Sensor 42 eingebaut. Beide Sensoren 41, 42 funktionieren nach dem Wirbelstromprinzip. In dem Führungsgehäuse 40 ist ein Meßstift 43 in Längsrichtung, d. h. horizontal verschieblich geführt. Er ragt in Richtung auf die gegenüberliegende Stirnseite 33 aus dem Führungsgehäuse 40 heraus. Auf der der Stirnseite 33 abgewandten Seite ist in dem Führungsgehäuse 40 eine Druckfeder 44 angeordnet, die bestrebt ist, den Meßstift 43 in Richtung auf den Anschlagbolzen 36 zu bewegen. Die Druckfeder 44 ist zwischen zwei Stützkörpern 45, 46 eingeschlossen, wobei der linksseitige Stützkörper 45 mit dem Meßstift 43 verbunden und mit diesem verschieblich geführt ist, während der rechte Stützkörper 46 ortsfest in dem Führungsgehäuse 40 gehalten ist.

Der Meßstift 43 besteht aus einem nicht metallischen Material, nämlich Kunststoff. Im Mittenbereich ist er von einer Metallhülse 47 umgeben, die an ihren Enden Hülsenkanten 48, 49 bildet.

In Figur 4 ist ein schematischer Schaltplan für die Steuerung des als Elektromotor ausgebildeten Antriebsmotors 50 gezeigt, der Teil des Backenantriebs 7 ist. Über Netzleitungen 51, 52 kann er mit einem elektrischen Netz verbunden werden. In der oberen Netzleitung 51 sitzt eine Leistungsreduziereinrichtung 53, die die Leistung des Antriebsmotors 50 elektronisch durch Phasenanschnitt begrenzt. Die Leistungsreduziereinrichtung 53 wird durch eine Parallelleitung 54 überbrückt, in der ein Überbrückungsschalter 55 sitzt. Vor der Verzweigung der Parallelleitung 54 befindet sich ein An-Aus-Schalter 56. Sowohl der Überbrückungsschalter 55 wie auch der An-Aus-Schalter 56 sind mit einer hier nicht näher dargestellten Steuereinrichtung verbunden. Diese Steuereinrichtung ist auch mit den Sensoren 41, 42 gekoppelt.

Zu Beginn eines Preßvorgangs befindet sich das Preßgerät 1 in der in Figur 1 gezeigten Offenstellung. In dieser Stellung ist der Meßstift 45 am weitesten aus dem Führungsgehäuse 40 in Richtung auf den Anschlagbolzen 36 herausgedrückt. Wie Figur 5 zeigt, befindet sich die Metallhülse 47 im Bereich des ersten linksseitigen Sensors 41, jedoch noch nicht im Bereich des zweiten rechtsseitigen Sensors 42. Damit tritt nur bei dem ersten Sensor 41 eine Dämpfung des Schwingkreises auf. Dies interpretiert die Steuereinrichtung entsprechend und gibt Signale ab, so daß der Überbrückungsschalter 55 eine Offenstellung einnimmt und der An-Aus-Schalter 56 geschlossen ist. Durch einen weiteren, hier nicht näher gezeigten, von außen bedienbaren Handschalter kann der Antriebsmotor 50 in Betrieb genommen werden. Dies hat zur Folge, daß die Preßbacken 21, 22 zusammengefahren werden, und zwar zunächst mit reduzierter Leistung und damit wesentlich langsamer als bei Beaufschlagung mit voller Leistung.

Ab einer gewissen Stellung kommt der Anschlagbolzen 36 in Anlage an den Meßstift 43, so daß dieser aus seiner Ruhestellung gegen die Druckfeder 44 in das Führungsgehäuse 40 hineingedrückt wird. Der Beginn dieser Bewegung zeigt Figur 5, wobei die Wirkung des Anschlagbolzens 36 durch den Pfeil P symbolisiert ist. Die Verschiebung des Meßstifts 43 hat zur Folge, daß die Metallhülse 47 mit der rechtsseitigen Hülsenkante 49 in den Wirkungsbereich des zweiten Sensors 42 einfährt und dort eine Dämpfung des Schwingkreises bewirkt (Figur 6). Dies erzeugt ein Eingangssignal an die Steuereinrichtung und erzeugt dort ein Ausgangssignal für den Überbrückungsschalter 55 mit der Wirkung, daß dieser geschlossen wird. Dies hat zur Folge, daß der Antriebsmotor 50 für die weitere Bewegung der Preßbacken 21, 22 gegeneinander seine volle Leistung abgibt.

Im Bereich der vorgesehenen Endpreßstellung der Preßbacken 21, 22 ergibt sich die aus Figur 7 ersichtliche Stellung des Meßstifts 43. In dieser Stellung ist die Metallhülse 47 nunmehr aus dem Einflußbereich des ersten Sensors 41 herausgefahren, so daß die Dämpfung dort aufgehoben ist. Dies erzeugt ein Signal, das ein Öffnen des An-Aus-Schalters 56 erzeugt. Damit wird die Energiezufuhr zu dem Antriebsmotor 50 unterbrochen.

Die vorbeschriebene Leistungssteuerung des Antriebsmotors 49 hat den Vorzug, daß die von ihm bewegten Teile des Preßgeräts 1, insbesondere der Antriebskopf 8 mit den Antriebsrollen 9, 10 und die Schwenkhebel 13, 14, zu Beginn des Preßvorgangs und damit vor allem zur Überwindung des Leerhubs mit einer wesentlich geringeren Geschwindigkeit bewegt werden als ohne Leistungsreduzierung durch die Leistungsreduziereinrichtung 53. Die bewegten Teile speichern damit nur eine entsprechend reduzierte kinetische Energie. Sie sollte nicht höher sein als diejenige, die beim eigentlichen Preßvorgang entsteht, also in der Phase der Verformung des Preßfittings 24 und des Rohrendbereichs 23. Dies wiederum bewirkt, daß bei Abschaltung des Antriebsmotors 50 durch den An-Aus-Schalter 56 nur noch ein geringer Rest an kinetischer Energie vorhanden ist.

Die Umschaltung von der ersten Phase mit Leistungsreduzierung auf die zweite Phase ohne diese Reduzierung kann an die jeweilige Ausbildung der Preßbackeneinheit 1a angepaßt werden. Die Anpassung wird so vorgenommen, daß die Umschaltung beim Preßvorgang umso später erfolgt, je geringer die durch den Antriebsmotor 50 bewegten Massen und je weicher die Kombination aus Preßfitting 24 und Rohrendbereich 23 ist. Allgemein werden die zu bewegenden Massen umso geringer sein, je kleiner der Durchmesser des zu verpressenden Preßfittings 24 ist, für die die betreffende Preßbackeneinheit 1a vorgesehen ist. Bei großen Preßbackeneinheiten 1a für die Verpressung großer Durchmesser, bei der hohe Verformungsarbeit geleistet werden muß, wird man die Lage der Metallhülse 47 und/oder den Abstand der Sensoren 41, 42 und/oder die Länge der Metallhülse 47 derart ausbilden, daß die Metallhülse 47 mit der rechtsseitigen Hülsekante 49 möglichst früh in den Einflußbereich des zweiten Sensors 42 gelangt. Bei kleinen Preßbackeneinheiten 1a für die Verpressung kleinerer Durchmesser wird man entsprechend umgekehrt verfahren. Im übrigen kann durch die Ausbildung der Metallhülse 47 und Anordnung der Sensoren 41, 42 auch bestimmt werden, daß die Abschaltung des Antriebsmotors 50 schon vor Erreichen der Endpreßstellung der Pressen 21, 22 erfolgt, so daß die kinetische Restenergie das Schließen der Preßbacken 21, 22 bis zur Endpreßstellung bewirkt.

Aus der vorstehenden Beschreibung wird deutlich, daß jeder Preßbackeneinheit 1a auf einfache Weise ein individuell angepaßter Abstandsaufnehmer 35 zugeordnet werden kann, der bei Anschluß des Backenantriebs 7 an die jeweilige Preßbackeneinheit 1a für einen entsprechend angepaßten Leistungsverlauf des Antriebsmotors 50 mit dem Ziel sorgt, in den vom Antriebsmotor 50 bewegten Massen zum Preßende hin eine möglichst geringe kinetische Energie aufzubauen. Dies reduziert die Beanspruchungen insbesondere der Preßbackeneinheit 1a, so daß sie wesentlich schwächer dimensioniert werden kann und geringerem Verschleiß unterliegt.

## Patentansprüche

1. Verfahren zum Verbinden von Werkstücken, insbesondere von Preßfittings (24) mit einem Rohr (23), bei dem ein Preßgerät (1) mit seinen wenigstens zwei Preßbacken (21, 22) in Offenstellung an die Verbindungsstelle der Werkstücke (23, 24) angesetzt und die Preßbacken (21, 22) dann mittels eines Backenantriebs (7, 50) gegeneinander unter plastischer Verformung der Werkstücke (23, 24) bis in eine Endpreßstellung verfahren werden, in der die Leistungsbeaufschlagung der Preßbacken (21, 22) spätestens endet, **dadurch gekennzeichnet, daß** die Leistung des Backenantriebs (7, 50) derart gesteuert wird, daß die Preßbacken (21, 22) wenigstens zum Preßende hin eine geringere kinetische Energie haben als ohne Leistungssteuerung.

2. Verfahren nach Anspruch 1,
**dadurch gekennzeichnet, daß** der Backenantrieb (7, 50) spätestens bei Erreich den Endpreßstellung abgeschaltet wird.

3. Verfahren nach Anspruch 1 oder 2,
**dadurch gekennzeichnet, daß** die Preßbacken (21, 22) in einer ersten Phase des Preßvorgangs, bei der ein Leerhub überwunden wird, mit einem Leistungsverlauf beaufschlagt werden, bei dem die Leistung derart herabgesetzt wird, daß die Preßbacken (21, 22) wenigstens am Ende dieser Phase eine geringere kinetische Energie haben als ohne Leistungsherabsetzung.

4. Verfahren nach Anspruch 3,
**dadurch gekennzeichnet, daß** der Leistungsverlauf des Backenantriebs (7, 50) derart ist, daß die kinetische Energie der Preßbacken (21, 22) in der ersten Phase nicht die bei Preßende übersteigt.

5. Verfahren nach einem der Ansprüche 1 bis 4,
**dadurch gekennzeichnet, daß** der Leistungsverlauf des Backenantriebs (7, 50) derart ist, daß die kinetische Energie der Preßbacken (21, 22) zum Preßende hin abfällt.

6. Verfahren nach einem der Ansprüche 1 bis 5,
**dadurch gekennzeichnet, daß** die Leistungsbeaufschlagung der Preßbacken (21, 22) schon vor Erreichen der Endpreßstellung abgebrochen wird.

7. Verfahren nach einem der Ansprüche 1 bis 6,
**dadurch gekennzeichnet, daß** der Leistungsverlauf stufenlos an die jeweils zu leistende Arbeit angepaßt wird.

8. Verfahren nach einem der Ansprüche 1 bis 6,
**dadurch gekennzeichnet, daß** sich der Leistungsverlauf in Stufen ändert.

9. Preßgerät (1) zum Verbinden von Werkstücken, insbesondere von Preßfittings (24) mit einem Rohr (23), mit wenigstens zwei Preßbacken (21, 22) und einem Backenantrieb (7, 50) zum Bewegen der Preßbacken (21, 22) aus einer Offen- in eine Endpreßstellung sowie mit einer Steuereinrichtung zur Steuerung des Backenantriebs (7, 50), wobei das Preßgerät (1) so ausgebildet ist, daß die Leistungsbeaufschlagung der Preßbacken (21, 22) spätestens bei Erreichen der Endpreßstellung endet,
**dadurch gekennzeichnet, daß** die Steuereinrichtung eine Leistungssteuereinrichtung (35, 53) aufweist, die einen derartigen Leistungsverlauf des Backenantriebs (7, 50) erzeugt, daß die Preßbacken (21, 22) wenigstens zum Preßende hin eine geringere kinetische Energie haben als ohne Leistungssteuerung.

10. Preßgerät nach Anspruch 9,
**dadurch gekennzeichnet, daß** die Leistungsteuereinrichtung (35, 53) in einer ersten Phase des Preßvorgangs, bei der ein Leerhub überwunden wird, einen Leistungsverlauf erzeugt, bei dem die Leistung derart herabgesetzt ist, daß die Preßbacken (21, 22) wenigstens am Ende dieser Phase eine geringere kinetische Energie haben als ohne Leistungsherabsetzung.

11. Preßgerät nach Anspruch 10,
**dadurch gekennzeichnet, daß** die Leistungssteuereinrichtung (35, 53) einen derartigen Leistungsverlauf erzeugt, daß die kinetische Energie der Preßbacken (21, 22) in der ersten Phase nicht die beim Preßende übersteigt.

12. Preßgerät nach einem der Ansprüche 9 bis 11,
**dadurch gekennzeichnet, daß** die Leistungssteuereinrichtung (35, 53) derart zweistufig ausgebildet ist, daß die Leistung des Backenantriebs (7, 50) nur in der ersten Phase herabgesetzt wird.

13. Preßgerät nach einem der Ansprüche 9 bis 12,
**dadurch gekennzeichnet, daß** die Leistungssteuereinrichtung (35, 53) derart ausgebildet ist, daß die erste Phase bis in den Bereich der Verformung hineinreicht.

14. Preßgerät nach einem der Ansprüche 9 bis 13,
**dadurch gekennzeichnet, daß** die Leistungssteuereinrichtung (35, 53) einen derartigen Leistungsverlauf erzeugt, daß die kinetische Energie der Preßbacken (21, 22) zum Preßende hin abfällt.

15. Preßgerät nach eindem der Ansprüche 9 bis 14,
**dadurch gekennzeichnet, daß** ein Endabschalter (56) zur Abschaltung des Backenantriebs (7, 50) spätestens bei Erreichen der Endpreßstellung vorgesehen ist.

16. Preßgerät nach Anspruch 15,
**dadurch gekennzeichnet, daß** die Steuereinrichtung den Endabschalter (56) so ansteuert, daß der Backenantrieb (7, 50) vor Erreichen der Endpreßstellung abgeschaltet wird.

17. Preßgerät nach Anspruch 15 oder 16,
**dadurch gekennzeichnet, daß** der Endabschalter (56) mit einem Aufnehmer (35) zur Erfassung der Stellung der Preßbacken (21, 22) verbunden ist, der in der Weise mit der Steuereinrichtung gekoppelt ist, daß die Leistungssteuereinrichtung (53) in Abhängigkeit von der Stellung der Preßbacken (21, 22) angesteuert wird.

18. Preßgerät nach Anspruch 17,
**dadurch gekennzeichnet, daß** der Aufnehmer (35) mit einem Signalgeber (39) für die Leistungssteuereinrichtung (53) versehen ist.

19. Preßgerät nach Anspruch 17 oder 18,
**dadurch gekennzeichnet, daß** der Aufnehmer (35) derart an einer Preßbacke (21, 22) angeordnet ist, daß er die Stellung dieser Preßbacke (21) zu einer benachbarten Preßbacke (22) erfaßt.

20. Preßgerät nach einem der Ansprüche 17 bis 19,
**dadurch gekennzeichnet, daß** der Aufnehmer (35) und ggf. der Signalgeber (39) an den Preßbacken (21, 22) angeordnet sind.

21. Preßgerät nach einem der Ansprüche 17 bis 20,
**dadurch gekennzeichnet, daß** der Aufnehmer (35) an zwei benachbarten Preßbacken (21, 22) derart angeordnet ist, daß er die Stellung dieser Preßbacken (21, 22) relativ zueinander erfaßt.

22. Preßgerät nach einem der Ansprüche 17 bis 21,
**dadurch gekennzeichnet, daß** der Aufnehmer (35) im Bereich der gegenüberliegenden Stirnseiten (33, 34) von zwei benachbarten Preßbacken (21, 22) angeordnet ist.

23. Preßgerät nach einem der Ansprüche 17 bis 22,
**dadurch gekennzeichnet, daß** der Aufnehmer (35) jeweils einen beweglich gelagerten Fühler (43) aufweist, der mit einem Anschlag (36) zusammenwirkt, gegen den der Fühler (45) beim Schließen der Preßbacken (21, 22) anfährt.

24. Preßgerät nach Anspruch 23,
**dadurch gekennzeichnet, daß** der Fühler (43) an einer Preßbakke (22) und der Anschlag (36) an der benachbarten Preßbacke (21) angebracht sind.

25. Preßgerät nach Anspruch 23 oder 24,
**dadurch gekennzeichnet, daß** der Anschlag (36) in Bewegungsrichtung des Fühlers (42) verstellbar ist.

## Claims

1. A method for joining workpieces, in particular press fittings (24) to a pipe (23), in which a pressing device (1) is placed with its at least two pressing jaws (21, 22) in the open position against the joining point of the workpieces (23, 24), and the pressing jaws (21, 22) are then moved with respect to one another by means of a jaw drive (7, 50), while the workpieces (23, 24) deform plastically, into a terminal pressed position in which, at the latest, the application of power to the press jaws (21, 22) ends, wherein the power of the jaw drive (7, 50) is controlled in such a way that, at least toward the completion of pressing, the pressing jaws (21, 22) have less kinetic energy than without a power controller.

2. The method as defined in Claim 1, wherein the jaw drive (7, 50) is shut down, at the latest, when the terminal pressed position is reached.

3. The method as defined in Claim 1 or 2, wherein the pressing jaws (21, -22), in a first phase of the pressing-operation in which a nonworking stroke is being performed, are acted upon by a power profile in which the power is reduced in such a way that the pressing jaws (21, 22) have, at least at the end of this phase, less kinetic energy than without power reduction.

4. The method as defined in Claim 3, wherein the power profile of the jaw drive (7, 50) is such that the kinetic energy of the pressing jaws (21, 22) in the first phase does not exceed that at the completion of pressing.

5. The method as defined in one of Claims 1 to 4, wherein the power profile of the jaw drive (7, 50) is such that the kinetic energy of the pressing jaws (21, 22) falls off toward the completion of pressing.

6. The method as defined in one of Claims 1 to 5, wherein the application of power to the pressing jaws (21, 22) is discontinued even before the terminal pressed position is reached.

7. The method as defined in one of Claims 1 to 6, wherein the power profile is adapted steplessly to the particular work to be performed.

8. The method as defined in one of Claims 1 to 6, wherein the power profile changes in steps.

9. A pressing device (1) for joining workpieces, in particular press fittings (24) to a pipe (23), having at least two pressing jaws (21, 22) and a jaw drive (7, 50) for moving the pressing jaws (21, 22) from an open position into a terminal pressed position, and having a control device for controlling the jaw drive (7, 50), the pressing device (1) being configured so that the application of power to the press jaws (21, 22) ends, at the latest, when the terminal pressed position is reached, wherein the control device has a power control device (35, 53) which generates a power profile for the jaw drive (7, 50) such that the pressing jaws (21, 22) have, at least toward the completion of pressing, less kinetic energy than without a power controller.

10. The pressing device as defined in Claim 9, wherein in a first phase of the pressing operation in which a nonworking stroke is being performed, the power control device (35, 53) generates a power profile in which the power is reduced in such a way that the pressing jaws (21, 22) have, at least at the end of this phase, less kinetic energy than without power reduction.

11. The pressing device as defined in Claim 10, wherein the power control device (35, 53) generates a power profile such that the kinetic energy of the pressing jaws (21, 22) in the first phase does not exceed that at the completion of pressing.

12. The pressing device as defined in one of Claims 9 to 11, wherein the power control device (35, 53) is configured in two steps such that the power of the jaw drive (7, 50) is reduced only in the first phase.

13. The pressing device as defined in one of Claims 9 to 12, wherein the power control device (35, 53) is configured so that the first phase extends into the deformation region.

14. The pressing device as defined in one of Claims 9 to 13, wherein the power control device (35, 53) generates a power profile such that the kinetic energy of the pressing jaws (21, 22) falls off toward the completion of pressing.

15. The pressing device as defined in one of Claims 9 to 14, wherein a limit switch (56) is provided in order to shut down the jaw drive (7, 50), at the latest, when the terminal pressed position is reached.

16. The pressing device as defined in Claim 15, wherein the control device triggers the limit switch (56) in such a way that the jaw drive (7, 50) is shut down before the terminal pressed position is reached.

17. The pressing device as defined in Claim 15 or 16, wherein the limit switch (56) is connected to a sensor (35) for sensing the position of the pressing jaws (21, 22), which is coupled to the control device in such a way that the power control device (53) is triggered as a function of the position of the pressing jaws (21, 22).

18. The pressing device as defined in Claim 17, wherein the sensor (35) is equipped with a signal generator (39) for the power control device (53).

19. The pressing device as defined in Claim 17 or 18, wherein the sensor (35) is arranged on one pressing jaw (21, 22) in such a way that it senses the position of said pressing jaw (21) with respect to an adjacent pressing jaw (22).

20. The pressing device as defined in one of Claims 17 to 19, wherein the sensor (35) and optionally the signal generator (39) are arranged on the pressing jaws (21, 22).

21. The pressing device as defined in one of Claims 17 to 20, wherein the sensor (35) is arranged on two adjacent pressing jaws (21, 22) in such a way that it senses the position of said pressing jaws (21, 22) relative to one another.

22. The pressing device as defined in one of Claims 17 to 21, wherein the sensor (35) is arranged in the region of the opposing end surfaces (33, 34) of two adjacent pressing jaws (21, 22).

23. The pressing device as defined in one of Claims 17 to 22,-wherein the sensor (35) has in each case a movably mounted feeler (43) which coacts with a stop (36) against which the feeler (45) arrives as the pressing jaws (21, 22) close.

24. The pressing device as defined in Claim 23, wherein the feeler (43) is installed on one pressing jaw (22), and the stop (36) on the adjacent pressing jaw (21).

25. The pressing device as defined in Claim 23 or 24, wherein the stop (36) is configured adjustably in the movement direction of the feeler (42).

## Revendications

1. Procédé pour raccorder des pièces, notamment des raccords à presser (24) à un tuyau (23), dans le cas duquel une presse (1) est appliquée en position ouverte sur le point de raccordement des pièces (23, 24) avec au moins deux mâchoires de pression (21, 22) et les mâchoires de pression (21, 22) sont déplacées l'une contre l'autre jusqu'à une position finale de pressage au moyen d'un entraînement de mâchoire (7, 50) avec déformation plastique des pièces (23, 24) dans laquelle position prend fin au plus tard l'alimentation en puissance des mâchoires de pression (21, 22), **caractérisé en ce que** la puissance de l'entraînement des mâchoires (7, 50) est commandée de telle sorte que les mâchoires de pression (21, 22) ont, au moins en fin de pressage, une énergie cinétique plus petite que celle sans commande de puissance.

2. Procédé selon la revendication 1, **caractérisé en ce que** l'entraînement des mâchoires (7, 50) est arrêté au plus tard lorsque la position finale de pressage est atteinte.

3. Procédé selon la revendication 1 ou 2, **caractérisé en ce que** les mâchoires de pression (21, 22), dans une première phase de l'opération de pressage, dans le cas de laquelle une course à vide est franchie, sont contraintes suivant une allure de puissance, dans le cas de laquelle la puissance est diminuée de telle sorte que les mâchoires de pression (21, 22) ont, au moins à la fin de cette phase, une énergie cinétique plus petite que celle sans diminution de la puissance.

4. Procédé selon la revendication 3, **caractérisé en ce que** l'allure de puissance de l'entraînement des mâchoires (7, 50) est de telle sorte que l'énergie cinétique des mâchoires de pression (21, 22) dans la première phase ne dépasse pas celle présente en fin de pressage.

5. Procédé selon l'une des revendications 1 à 4, **caractérisé en ce que** l'allure de puissance de l'entraînement des mâchoires (7, 50) est de telle sorte que l'énergie cinétique des mâchoires de pression (21, 22) diminue en fin de pressage.

6. Procédé selon l'une des revendications 1 à 5, **caractérisé en ce que** l'alimentation en puissance des mâchoires de pression (21, 22) est interrompue avant que la position finale de pressage ne soit atteinte.

7. Procédé selon l'une des revendications 1 à 6, **caractérisé en ce que** l'allure de puissance est adaptée de manière progressive au travail respectif à fournir.

8. Procédé selon l'une des revendications 1 à 6, **caractérisé en ce que** l'allure de puissance se modifie par paliers.

9. Presse (1) pour le raccordement de pièces, notamment de raccords à presser (24) à un tuyau (23), avec au moins deux mâchoires de pression (21, 22) et un entraînement de mâchoire (7, 50) pour le déplacement des mâchoires de pression (21, 22) d'une position ouverte à une position finale de pressage, ainsi qu'avec un dispositif de commande pour la commande de l'entraînement de mâchoire (7, 50), la presse (1) étant formée de telle sorte que l'alimentation en puissance des mâchoires de pression (21, 22) prend fin au plus tard en atteignant la position finale de pressage, **caractérisée en ce que** le dispositif de commande présente un dispositif de commande de la puissance (35, 53) qui crée une allure de puissance de l'entraînement des mâchoires (7, 50) de telle sorte que les mâchoires de pression (21, 22) ont, au moins vers la fin du pressage, une énergie cinétique plus petite que celle sans commande de puissance.

10. Presse selon la revendication 9, **caractérisée en ce que** le dispositif de commande de puissance (35, 53), dans une première phase de l'opération de pressage, dans le cas de laquelle une course à vide est franchie, crée une allure de puissance, dans le cas de laquelle la puissance est diminuée de telle sorte que les mâchoires de pression (21, 22) ont, au moins à la fin de cette phase, une énergie cinétique plus petite que celle sans diminution de la puissance.

11. Presse selon la revendication 10, **caractérisée en ce que** le dispositif de commande de puissance (35, 53) crée une telle allure de puissance que l'énergie cinétique des mâchoires de pression (21, 22), dans la première phase, ne dépasse pas celle obtenue en fin de pressage.

12. Presse selon l'une des revendications 9 à 11, **caractérisée en ce que** le dispositif de commande de puissance (35, 53) est réalisé à deux étages de telle sorte que la puissance de l'entraînement des mâchoires (7, 50) n'est diminuée que pendant la première phase.

13. Presse selon l'une des revendications 9 à 12, **caractérisée en ce que** le dispositif de commande de puissance (35, 53) est réalisé de telle sorte que la première phase dure jusque dans la zone de la déformation.

14. Presse selon l'une des revendications 9 à 13, **caractérisée en ce que** le dispositif de commande de puissance (35, 53) crée une telle allure de puissance que l'énergie cinétique des mâchoires de pression (21, 22) diminue en fin de pressage.

15. Presse selon l'une des revendications 9 à 14, **caractérisée en ce qu**'un interrupteur de fin de course (56) est prévu pour l'arrêt de l'entraînement des mâchoires (7, 50), au plus tard lorsque la position finale de pressage est atteinte.

16. Presse selon la revendication 15, **caractérisée en ce que** le dispositif de commande commande l'interrupteur de fin de course (56) de telle sorte que l'entraînement des mâchoires (7, 50) est arrêté avant que la position finale de pressage ne soit atteinte.

17. Presse selon la revendication 15 ou 16, **caractérisée en ce que** l'interrupteur de fin de course (56) est raccordé à un capteur (35) pour détecter la position des mâchoires de pression (21, 22), ce capteur étant couplé au dispositif de commande de façon à ce que le dispositif de commande de puissance (53) soit commandé en fonction de la position des mâchoires de pression (21, 22).

18. Presse selon la revendication 17, **caractérisée en ce que** le capteur (35) est muni d'un générateur de signaux (39) pour le dispositif de commande de puissance (53).

19. Presse selon la revendication 17 ou 18, **caractérisée en ce que** le capteur (35) est placé de telle sorte sur une mâchoire de pression (21, 22) qu'il détecte la position de cette mâchoire (21) par rapport à une mâchoire de pression (22) adjacente.

20. Presse selon l'une des revendications 17 à 19, **caractérisée en ce que** le capteur (35) et éventuellement le générateur de signaux (39) sont placés sur les mâchoires de pression (21, 22).

21. Presse selon l'une des revendications 17 à 20, **caractérisée en ce que** le capteur (35) est placé sur deux mâchoires de pression (21, 22) adjacentes de telle sorte qu'il détecte la position de ces mâchoires de pression (21, 22) relativement l'une par rapport à l'autre.

22. Presse selon l'une des revendications 17 à 21, **caractérisée en ce que** le capteur (35) est placé dans la partie des cotés frontaux (33, 34) opposés de deux mâchoires de pression (21, 22) adjacentes.

23. Presse selon l'une des revendications 17 à 22, **caractérisée en ce que** le capteur (35) présente respectivement une sonde (43) placée de manière mobile, agissant avec une butée (36), contre laquelle la sonde (45) arrive lors de la fermeture des mâchoires de pression (21, 22).

24. Presse selon la revendication 23, **caractérisée en ce que** la sonde (43) est installé sur l'une des mâchoires de pression (22) et la butée (36) sur la mâchoire de pression (21) adjacente.

25. Presse selon la revendication 23 ou 24, **caractérisée en ce que** la butée (36) est réglable dans le sens du mouvement de la sonde (42).
